# EUROPEAN PATENT APPLICATION

(11) **EP 2 886 526 A1**
(43) Date of publication of application: **24.06.2015**
(21) Application number: 14198237.1
(22) Date of filing: 16.12.2014
(51) Int. Cl.: C04B 41/85, F01D 5/28

(54) **Environmentally resistant patches and delivery systems**

(30) Priority: 19.12.2013 US 201314134257
(71) Applicant: General Electric Company, Schenectady, New York 12345 (US)
(72) Inventor: Roberts, Herbert Chidsey, Cincinnati, OH Ohio 45215 (US); Lipkin, Don Mark, Niskayuna, NY New York 12309 (US); Antonlino, Nicholas Edward, Niskayuna, NY New York 29615 (US)
(74) Representative: Szary, Anne Catherine

(57) **Abstract**

An environmentally resistant patch (50) includes one or more rare earth silicates, wherein an inorganic composition of the environmentally resistant patch includes, once cured, from about 80 mole percent to about 100 mole percent of a rare earth monosilicate and/or rare earth disilicate composition and from about 0 mole percent to about 20 mole percent of an inorganic additive, and, wherein the environmentally resistant patch (50) has, once cured, an adhesive strength of at least about 3 MPa and a coefficient of thermal expansion of from about 3.5 x 10⁻⁶/°C to about 7.5 x 10⁻⁶/°C.

## Description

### BACKGROUND OF THE INVENTION

The subject matter disclosed herein relates to patch repair and, more specifically, environmentally resistant patches for filling voids in silicon-containing components, such as silicon carbide (SiC) based ceramic matrix composites (CMCs).

Environmental barrier coatings (EBCs) protect gas turbine components fabricated from silicon-containing substrates from exposure to potentially harmful chemical environments in service. Examples of silicon-containing substrates include SiC based CMCs, SiC or silicon nitride (Si₃N₄) based monolithic ceramics, and metal silicides, such as Mo-Si-B and Nb-Si based composites. Examples of EBCs include alkaline earth aluminosilicates (e.g., barium-strontium aluminosilicate, or BSAS), rare earth (RE) monosilicates having the general composition RE₂SiO₅ and RE disilicates having the general composition RE₂Si₂O₇. The RE elements can include La, Ce, Pr, Nd, Sm, Eu, Gd, Tb, Dy, Ho, Er, Tm, Yb, and/or Lu, and the rare earth-like elements Y and/or Sc. EBCs are generally selected to have a good match in their coefficient of thermal expansion (CTE) to that of the silicon-containing substrate material.

Some EBC materials are deposited on components using a plasma spraying process. The plasma spraying process provides flexibility to deposit a large variety of materials within a wide coating thickness range (ranging from about 0.001 inch to about 0.080 inch) without major process modifications.

Furthermore, if an EBC experiences a localized spall or a pinhole defect, the underlying CMC may be subject to cavitation resulting from water vapor induced volatilization and subsequent surface recession during service. If allowed to grow unmitigated, such cavities may reduce the load-bearing capability of the component, disrupt airflow, or even progress to through-thickness holes that lead to ingestion of combustion gases or leakage of high-pressure cooling air, thus adversely affecting operating efficiency and durability of the machine.

Accordingly, materials and methods for filling surface-connected voids in turbine components would be welcome in the art.

### BRIEF DESCRIPTION OF THE INVENTION

In one embodiment, an environmentally resistant patch is disclosed. The environmentally resistant patch includes one or more rare earth silicates, wherein an inorganic composition of the environmentally resistant patch includes, once cured, from about 80 mole percent to about 100 mole percent of a rare earth monosilicate and/or rare earth disilicate and from about 0 mole percent to about 20 mole percent of an inorganic additive, and, wherein the environmentally resistant patch has, once cured, an adhesive strength of at least about 3 MPa and a coefficient of thermal expansion of from about 3.5 x 10⁻⁶/°C to about 7.5 x 10⁻⁶/°C.

In another embodiment, a turbine engine component is disclosed. The turbine engine component includes a substrate material, a recession resistant outer layer, and, an environmentally resistant patch at least partially filling a void extending through the recession resistant outer layer. The environmentally resistant patch includes one or more rare earth silicates, wherein an inorganic composition of the environmentally resistant patch comprises, once cured, from about 80 mole percent to about 100 mole percent of a rare earth monosilicate and/or rare earth disilicate composition and from about 0 mole percent to about 20 mole percent of an inorganic additive, and, wherein the environmentally resistant patch has, once cured, an adhesive strength of at least about 3 MPa and a coefficient of thermal expansion of from about 3.5 x 10⁻⁶/°C to about 7.5 x 10⁻⁶/°C.

In yet another embodiment, an environmentally resistant patch delivery system is disclosed. The environmentally resistant patch delivery system includes an articulatable support and an actuatable dispensing tool supported by the articulatable support. The actuatable dispensing tool includes a reservoir housing an uncured environmentally resistant patch and an actuator for dispensing uncured environmentally resistant patch through a dispenser disposed at an end of the actuatable dispensing tool.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a partial sectional side view of a component coated with an environmental barrier coating according to one or more embodiments shown or described herein;
FIG. 2 is a component partially coated with an environmental barrier coating and containing an environmentally resistant patch according to one or more embodiments shown or described herein;
FIG. 3 is a schematic illustration of an environmentally resistant patch delivery system according to one or more embodiments shown or described herein; and,
FIG. 4 is a schematic illustration of an actuatable dispensing tool of the environmentally resistant patch delivery system according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present disclosure provide environmentally resistant (e.g., stable and/or protective) patches for repair of silicon-containing materials, including, for example, a SiC-based CMC substrate. Further, the present disclosure provides a delivery system for delivering the environmentally resistant patch to a cavity in the silicon-containing material so as to affect a repair without disassembly of the system. In some embodiments, the silicon-containing material is a CMC component in a turbine engine and the repair is accomplished *in situ* (i.e., without disassembly of the case but when the turbine is not running).

Embodiments of the present disclosure are described below in reference to its application in connection with a component for a gas turbine engine fabricated substantially from a silicon-containing material, such as a SiC-based CMC, SiC, Si₃N₄, and/or a metal silicide. However, it should be appreciated by those skilled in the art and guided by the teachings herein provided that the disclosure is likewise applicable to any suitable component that is fabricated from a silicon-containing material. Further, such components are incorporated into systems including, without limitations, turbine engines, wherein the components are subjected to extreme thermal and/or chemical conditions during system operation. Such components may be subjected to combustion environments for durations in excess of 20,000 hours at material surface temperatures that can exceed 2200°F.

In one embodiment, various components of the gas turbine engine are formed of a silicon-containing ceramic or CMC material. In a particular embodiment, the CMC material is a SiC/SiC CMC material. The SiC/SiC CMC material includes a silicon carbide containing matrix reinforced with coated silicon carbide fibers. In one embodiment, the ceramic material is a monolithic ceramic material, such as SiC or Si₃N₄. In one embodiment, various components of the gas turbine engine are formed of a Mo-Si-B or Nb-Si based metal silicide material.

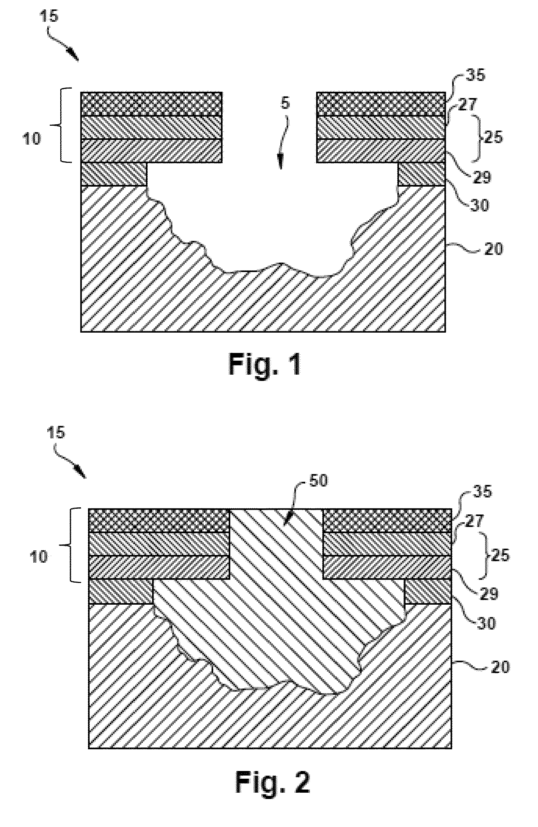

Referring now to Figure 1, in one embodiment, an environmental barrier coating 10 is applied to a silicon-based material, such as a turbine engine component 15 fabricated from a CMC substrate material 20. It is apparent to those skilled in the art and guided by the teachings herein provided that turbine engine component 15 can be fabricated from any suitable silicon-based material.

Environmental barrier coating 10 can include a variety of embodiments as appreciated to those skilled in the art. For example, as illustrated in FIG. 1, the environmental barrier coating 10 can comprise at least one intermediate layer 25 bonded to or deposited on CMC substrate material 20. As used herein, references to the term "bonded" are to be understood to include direct and indirect bonding through another layer, such as an optional bondcoat 30. In one embodiment, bondcoat 30 comprises elemental silicon. In one embodiment, intermediate layer 25 has a total thickness of about 0.025 mm to about 1 mm. Intermediate layer 25 can have a coefficient of thermal expansion that is well matched to the coefficient of thermal expansion of substrate material 20. As used herein, references to the term "matched," in reference to a coefficient of thermal expansion, are to be understood to refer to a difference in coefficients of thermal expansion within about 2x10⁻⁶/°C. In a particular embodiment, bondcoat 30 has a coefficient of thermal expansion matched to substrate material 20.

In one embodiment, intermediate layer 25 includes at least one intermediate layer 29 substantially formed from a rare earth (RE) monosilicate or disilicate. Said RE monosilicates can have the general composition RE₂SiO₅ and RE disilicates can have the general composition RE₂Si₂O₇. The RE can comprise La, Ce, Pr, Nd, Sm, Eu, Gd, Tb, Dy, Ho, Er, Tm, Yb, and/or Lu, and/or the rare earth-like elements Y and/or Sc. For example, a first intermediate layer 29 can include (Y,Yb)₂Si₂O₇. Additionally, intermediate layer 25 can include a second or outer intermediate layer 27 positioned between first intermediate layer 29 and an external barrier layer, such as a recession resistant surface layer 35, as shown in Figure 1. Intermediate layer 27 can comprise, for example, an alkaline-earth aluminosilicate, such as (Ba,Sr)Si₂Al₂O₈ (BSAS). Although only two intermediate layers 27, 29 are shown in Figure 1, it is apparent to those skilled in the art and guided by the teachings herein provided that intermediate layer 25 can include any suitable number of layers. In one embodiment, the at least one intermediate layer 25 has a combined thickness of about 0.025 mm to about 1 mm.

A recession resistant surface layer 35 can further be applied to or deposited on intermediate layer 25. Recession resistant surface layer 35 is chemically compatible with the underlying intermediate layer 25 and has a high recession resistance in a water vapor containing environment, such as a combustion environment of a turbine engine. In one embodiment, recession resistant surface layer 35 is substantially formed from a rare earth (RE) monosilicate, where RE comprises Y, Sc, Dy, Ho, Er, Tm, Tb, Yb and/or Lu, the monosilicate having a general composition of RE₂SiO₅. For example, recession resistant surface layer 35 includes Y₂SiO₅ and is applied to intermediate layer 25.

Recession resistant surface layer 35 and any intermediate layers 25 can be applied using any suitable process known to those skilled in the art and guided by the teachings herein provided including, but not limited to, sol-gel chemistry, plasma spray, combustion thermal spray, electrophoretic deposition, slurry dip, slurry spray and/or slurry painting processes. Optional bondcoat 30 can also be deposited by thermal spray, chemical vapor deposition, slurry processing or any other suitable method.

In one embodiment, recession resistant surface layer 35 is applied uniformly to outer intermediate layer 27. In this embodiment, recession resistant surface layer 35 has a thickness of about 0.01mm to about 0.05mm. Recession resistant surface layer 35 has a suitable thickness to prevent or resist excessive cracking or peeling in service and to ameliorate penetration by water vapor.

Referring to FIG. 2, an environmentally resistant patch 50 can be used to fill a void 5 in the environmental barrier coating 10 and optionally extending into the bondcoat 30 and CMC substrate material 20. For example, in some embodiments, a void 5 may be present due to a pinhole defect, a spall or a crack in the environmental barrier coating 10 that can subsequently lead to recession-induced material loss in the underlying bondcoat 30 and/or CMC substrate material 20.

The environmentally resistant patch 50 comprises the appropriate characteristics to adhere to the adjacent material, have a CTE close to the adjacent materials, be sufficiently viscous to remain in the target area prior to curing, and have a packing density sufficiently high to survive densification on curing and subsequent operation - - all while possessing a chemical composition that protects the turbine engine component 15 from environmental degradation, such as by water vapor induced recession. For example, the environmental barrier coating patch 50 can generally comprise one or more rare earth silicates to achieve the necessary functional properties suitable for patching.

For example, the environmentally resistant patch 50 can have an adhesive strength that allows it to remain in contact with the adjacent environmental barrier coating 10 and/or CMC substrate material 20 once it is disposed in the void 5 of the turbine engine component 15 and cured. This can include an adhesive strength of at least about 3 MPa.

The environmentally resistant patch 50 can further possess a coefficient of thermal expansion that is suitably within the range of the CTE of the substrate material 20. Having a suitable coefficient of thermal expansion will allow the environmental barrier coating patch 50 to avoid imparting or encountering excessive forces from any thermal expansion of the turbine engine component 15 such as may occur during operation. For example, the environmental barrier coating 10 may have a coefficient of thermal expansion of from about 3.5 x 10⁻⁶/°C to about 7.5 x 10⁻⁶/°C, or from about 4 x 10⁻⁶/°C to about 6 x 10⁻⁶/°C, or about 4.5 x 10⁻⁶/°C to about 5.5 x 10⁻⁶/°C.

The environmentally resistant patch 50 can further be formulated to possess a desirable particle size distribution of its solid constituents. For example, the environmentally resistant patch 50 can comprise a mixture of coarse (from about 10 µm to about 100 µm in size), medium (from about 1 µm to about 10 µm in size), and/or fine (from about 10 nm to about 1 µm in size) particles. Depending on the chemical formulation necessary to achieve the suitable adhesion, CTE and any other sought properties, the particle sizes can be distributed to attain a sufficient particle packing that minimizes curing or sintering shrinkage. For example, in some embodiments, the environmentally resistant patch 50 comprises, prior to curing, on an inorganic solids volume basis, from about 40 percent to about 75 percent coarse sized particles, from about 10 percent to about 35 percent medium sized particles, and from about 1 percent to about 30 percent fine sized particles. In some embodiments, the environmentally resistant patch 50 can be, on an inorganic solids volume basis, from about 60 percent to about 70 percent coarse sized particles, from about 20 percent to about 30 percent medium sized particles, and from about 5 percent to about 15 percent fine sized particles. In some particular embodiments, the environmentally resistant patch 50 can be, on an inorganic solids volume basis, about 65 percent coarse sized particles, about 25 percent medium sized particles, and about 10 percent fine sized particles. In some particular embodiments, the environmentally resistant patch 50 can be, on an inorganic solids volume basis, about 50 percent coarse sized particles, about 24 percent medium sized particles, and about 26 percent fine sized particles. These particle size distributions can allow for sufficient strength during operation while still providing acceptable shrinkage during sintering.

The environmentally resistant patch 50 can further be formulated to possess an uncured viscosity suitable to being injected or otherwise disposed within the void 5 and at least temporarily remain there without dripping or running until it is cured. For example, in some embodiments, as will be presented later herein, the environmentally resistant patch 50 may be injected into the void 5 via an actuatable dispensing tool 120, as part of a patch delivery system 100, which acts similarly to a syringe. In such embodiments, the environmentally resistant patch 50 may thereby possess a viscosity that allows it to flow from a reservoir 121 of the actuatable dispensing tool 120 under pressure but remain in void 5 until curing. For example, the environmentally resistant patch 50 may have a viscosity of from about 1 Pa·s to about 2,000 Pa·s before curing, or from about 10 Pa·s to about 150 Pa·s before curing.

The environmentally resistant patch 50 may also comprise interconnected porosity resulting in a non-hermetic patch. This may allow for any potential gas or vapor to escape the void after the environmentally resistant patch 50 is applied and cured, such as during operation in a high-temperature oxidizing environment.

As discussed above, the environmentally resistant patch 50 can be chemically formulated to achieve the necessary properties to protect the turbine engine component 15 while still allowing for its disposition and application. For example, the environmental barrier coating patch 50 can be formulated to substantially approach the general RE₂SiO₅ and/or RE₂Si₂O₇ formulation of the environmental barrier coating 10 as its final chemistry, while still achieving one or all of the above presented properties.

In some embodiments, the environmentally resistant patch 50 can be RE silicate based using compositions near the monosilicate or disilicate line compound. For example, the environmentally resistant patch 50 may comprise - on an inorganic molar basis - from about 80 mole percent to about 100 mole percent of a rare earth monosilicate and/or a rare earth disilicate composition once cured. On an inorganic molar basis, the composition of the environmentally resistant patch 50 may comprise from about 0 mole percent to about 20 mole percent of an inorganic additive such as iron oxide, and/or aluminum oxide, and/or silica and/or a glass. As used herein, the term "cured" refers to the composition of the environmentally resistant patch after a heating (such as the state of the environmentally resistant patch after is disposed in a void and then heated). As also used herein, the term "uncured" refers to the composition of the environmentally resistant patch prior to a first heating (such as the state of the environmentally resistant patch before and during its application into a void). Furthermore, it should be appreciated that as defined herein, the relative mole percents of the constituents of the cured environmentally resistant patch 50 as presented and claimed herein encompass all compositions that meet these ranges as if said compositions were homogenized. However, it should also be appreciated that not all embodiments of these disclosed and claimed environmentally resistant patches 50 may, in fact, actually be homogenized.

For example, in one particular embodiment, the inorganic composition may comprise about 93 mole percent RE₂Si₂O₇, about 4 mole percent SiO₂, about 2 mole percent Fe₃O₄, and about 1 mole percent Al₂O₃. In some embodiments, RE can comprise Y, Yb, or any combination of Y+Yb.

As discussed above, in some embodiments the environmentally resistant patch 50 comprises, prior to curing, on an inorganic solids volume basis, for example, about 69 volume percent coarse sized particles (greater than about 10um median particle size), about 26 volume percent medium sized particles (between about 1 um and 10 um median particle size) and about 5 volume percent fine particles (smaller than about 1 um median particle size). The uncured composition can comprise, for example, on a mass basis: 0.8 percent fine sized fused silica powder, 28.3 percent medium sized 4mol% ytterbium-rich (i.e., having a monosilicate minor phase) disilicate powder, 58.2 percent coarse sized yttrium/ytterbium disilicate powder (60 percent by mole yttrium disilicate), 1.0 percent fine iron (II,III) oxide, 0.2 percent fine alumina, 1.8 percent polyethyleneimine (binder), and 9.7 percent water (solvent).

In some embodiments, the inorganic composition of the environmentally resistant patch 50 can include elemental silicon that oxidizes to silica and ultimately becomes incorporated into a rare earth silicate upon reaction with a RE oxide or RE monosolicate. For example, in one particular embodiment, the uncured environmentally resistant patch 50 may comprise by mass about 3.8 percent silicon powder, 11.2 percent ytterbium oxide powder, 17.5 percent 4mol% ytterbium-rich (i.e., having a monosilicate minor phase) disilicate powder, 55 percent yttrium/ytterbium disilicate powder (60 percent by mole yttrium disilicate), 1.3 percent iron (II,III) oxide, 0.3 percent alumina, and 10.9 percent diethylene glycol butyl ether.

As discussed above, in some embodiments the environmentally resistant patch 50 comprises, prior to curing, on an inorganic solids volume basis, for example, about 65 volume percent coarse sized particles (greater than about 10um median particle size), about 25 volume percent medium sized particles (between about 1 µm and 10 µm median particle size) and about 10 volume percent fine particles (smaller than about 1 µm median particle size). In embodiments incorporating said silicon, the uncured composition can comprise, for example, by mass percent: 0.7 percent medium sized silicon powder, 3.1 percent fine sized fused silica powder, 11.2 percent medium sized ytterbia powder, 17.5 percent medium sized RE-rich ytterbium disilicate powder (4mol% ytterbia rich, such that a Yb monosilicate minor phase results), 55.0 percent coarse sized yttrium/ytterbium disilicate powder (60 percent by mole yttrium disilicate), 1.3 percent fine sized iron oxide, 0.3 percent fine sized alumina, and 10.9 percent diethylene glycol butyl ether (solvent).

In some embodiments, the environmentally resistant patch 50 can include a high temperature glass that can wet SiC at high temperatures to further promote patch adhesion. Such glass may have a coefficient of thermal expansion between 3 x 10⁻⁶/°C and about 6 x 10⁻⁶/°C. Such glasses may have a chemical composition of the family RO-Al₂O₃-SiO₂ where RO is an alkali earth oxide. Such glasses are commercially available, such as, for example, Ferro 0002. For example, the inorganic composition can comprise from about 1 mass percent to about 10 mass percent glass, or about 5 mass percent glass.

The environmentally resistant patch 50 may thereby be formulated to fill the void 5 by tailoring, for example, the adhesive properties, coefficient of thermal expansion ("CTE") range, the viscosity range and/or the particle packing characteristics of the environmentally resistant patch 50 as will become appreciated herein. Furthermore, these compositions of the environmentally resistant patch 50 can thereby approach the chemical and/or thermophysical properties of the surrounding environmental barrier coating 10 and/or CMC substrate material 20 once it is cured, such as through one or more suitable thermal cycles, including turbine operation.

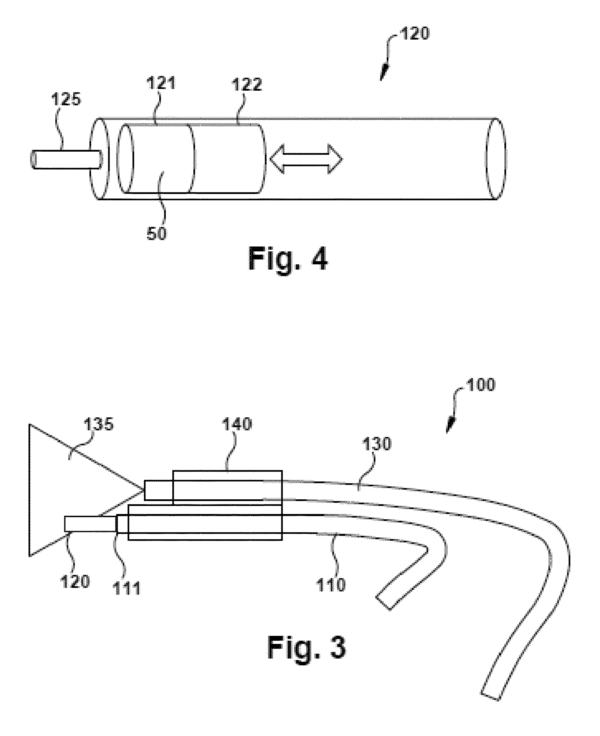

Referring now to FIGS. 3 and 4, a patch delivery system 100 is disclosed for dispensing the environmentally resistant patch 50 disclosed herein to a void 5 in a turbine engine component 15 (e.g., as illustrated in FIGS. 1 and 2). The patch delivery system 100 generally comprises an articulatable support 110 and an actuatable dispensing tool 120 supported by the articulatable support 110.

The articulatable support 110 can comprise any mechanical support system (e.g., a cable) that allows for the actuatable dispensing tool 120 to be traversed to a turbine engine component 15 without disassembly of the turbine case (i.e., *in situ*). For example, the articulatable support 110 can comprise a borescope-like mechanical system comprising a series of articulating joints that can maneuver around one or more obstacles to reach a target site. The articulatable support 110 can additionally or alternatively comprise any other suitable technology such as those utilized in borescopes or the like, as should be appreciated by those skilled in the art.

The actuatable dispensing tool 120, exemplarily disposed at an end 111 of the articulatable support 110 in FIG. 3, is a tool that houses and delivers the environmentally resistant patch 50 to the void 5. For example, as illustrated in FIG. 4, the actuatable dispensing tool 120 generally comprises a reservoir 121 for housing the uncured environmentally resistant patch 50 and an actuator 122 for dispensing the same through a dispenser 125. The actuatable dispensing tool 120 can comprise any suitable device for conveying the uncured environmentally resistant patch 50 through the dispenser 125, such as a mechanical plunger within a syringe. In some embodiments, the actuator 122 may have a pneumatic, hydraulic, mechanical or electro-mechanical connection to the operator of the patch delivery system 100 such that it can be physically controlled through the articulatable support 110. In other embodiments, the actuatable dispensing tool 120 may be controlled through a wireless communications system, such as Bluetooth or the like, to direct an electromechanical drive (e.g., screw drive or linear actuator) to dispense the uncured environmentally resistant patch 50 through a dispenser 125.

The patch delivery system 100 may further comprise one or more supplemental systems 130 to facilitate the locating, dispensing, leveling and/or curing of the environmentally resistant patch 50. For example, in some embodiments, the supplemental system 130 may comprise an optical system that provides an optical field of vision 135 that encompasses the dispenser 125 of the actuatable dispensing tool 120. Such embodiments can aid the operator in locating any voids 5 within the CMC substrate material 20 and positioning the dispensing tool 120 in said location for patch repair. For example, the optical system can comprise a borescope connected to the articulatable support 110.

In other embodiments, the supplemental system 130 may comprise a cleaning system (e.g., dry ice or solvent) to prepare the void 5 for patch repair, a thermal treatment system (e.g., laser or infrared heater) to facilitate curing of the patch 50, or a surface finishing system (e.g., a trowel, wiper or honing tool) that defines the surface of the patch 50 such as by leveling, wiping or otherwise manipulating the shape, topography and/or position of the surface.

In embodiments comprising one or more supplemental systems 130, the patch delivery system 100 may further comprise a connection system 140 to mechanically connect the supplemental system 130 to the articulatable support 110. The connection system 140 may comprise any suitable device, such as brackets, clips, or connected tubes that allow for the articulatable support and the supplemental system 130 to stay in alignment as they are traversed toward the turbine engine component 15 containing a void 5. The connection system 140 may facilitate the connection of one or more supplemental systems to the articulatable support 110, depending on the specific configuration of the patch delivery system 100.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. An environmentally resistant patch comprising:
   one or more rare earth silicates;
   wherein an inorganic composition of the environmentally resistant patch comprises, once cured, from about 80 mole percent to about 100 mole percent of a rare earth monosilicate and/or rare earth disilicate and from about 0 mole percent to about 20 mole percent of an inorganic additive; and,
   wherein the environmentally resistant patch has, once cured, an adhesive strength of at least about 3 MPa and a coefficient of thermal expansion of from about 3.5 x 10⁻⁶/°C to about 7.5 x 10⁻⁶/°C.
2. The environmentally resistant patch of clause 1, wherein the one or more rare earth silicates comprise at least one of a rare earth monosilicate and a rare earth disilicate, and wherein the rare earth comprises at least one of ytterbium and yttrium.
3. The environmentally resistant patch of clause 1 or clause 2, wherein the inorganic additive comprises at least one of iron oxide, aluminum oxide, silicon oxide and glass.
4. The environmentally resistant patch of any preceding clause, wherein the inorganic additive comprises elemental silicon.
5. The environmentally resistan patch of any preceding clause, wherein the environmentally resistant patch, uncured, comprises from about 30 percent by volume to about 80 percent by volume of the inorganic composition, and from about 70 percent by volume to about 20 percent by volume solvent.
6. The environmentally resistant patch of clause 5, wherein the environmentally resistant patch, uncured, further comprises from about zero percent by volume to about 10 percent by volume of one or more organic additives.
7. The environmentally resistant patch of any preceding clause, wherein the uncured inorganic particles have a size between 10 nm and 100 µm with a packing density greater than 30 percent by volume.
8. The environmentally resistant patch of any preceding clause, wherein the environmentally resistant patch comprises, prior to curing, inorganic particles comprising a bimodal size distribution between 10 nm and 100 µm with a packing density greater than 40 percent by volume.
9. The environmentally resistant patch of any preceding clause, wherein the environmentally resistant patch comprises, prior to curing, inorganic particles comprising a trimodal size distribution between 10 nm and 100 µm with a packing density greater than 50 percent by volume.
10. The environmentally resistant patch of any preceding clause, wherein the environmentally resistant patch comprises, prior to curing, on an inorganic solids volume basis from about 40 percent to about 75 percent coarse sized particles of from about 10 µm to about 100 µm in size, from about 10 percent to about 35 percent medium sized particles of from about 1 µm to about 10 µm in size, and from about 1 percent to about 30 percent fine sized particles of from about 10 nm to about 1 µm in size.
11. The environmentally resistant patch of any preceding clause, wherein the inorganic additive comprises a glass with a CTE from about 3.5 x 10⁻⁶/°C to about 6 x 10⁻⁶/°C.
12. The environmentally resistant patch of clause 11, wherein the inorganic additive comprises from about 1 mass percent to about 10 mass percent glass.
13. The environmentally resistant patch of any preceding clause, wherein the environmentally resistant patch has a viscosity of from about 1 Pa·s to about 2,000 Pa·s before curing.
14. The environmentally resistant patch of any preceding clause, wherein the environmentally resistant patch comprises interconnected porosity after it is cured.
15. The environmentally resistant patch of any preceding clause, wherein the environmentally resistant patch is provided in a void of a turbine engine component.
16. The environmentally resistant patch of clause 15, wherein the turbine engine component comprises a CMC substrate, and wherein the environmentally resistant patch at least partially extends into the CMC substrate.
17. A turbine engine component comprising:
   a substrate material;
   a recession resistant outer layer; and,
   an environmentally resistant patch at least partially filling a void extending through the recession resistant outer layer, wherein the environmentally resistant patch comprises one or more rare earth silicates, wherein an inorganic composition of the environmentally resistant patch comprises, once cured, from about 80 mole percent to about 100 mole percent of a rare earth monosilicate and/or rare earth disilicate composition and from about 0 mole percent to about 20 mole percent of an inorganic additive; and,
   wherein the environmentally resistant patch has, once cured, an adhesive strength of at least about 3 MPa and a coefficient of thermal expansion of from about 3.5 x 10⁻⁶/°C to about 7.5 x 10⁻⁶/°C.
18. The turbine engine component of clause 17, wherein the substrate comprises a CMC substrate.
19. An environmentally resistant patch delivery system comprising:
   an articulatable support; and,
   an actuatable dispensing tool supported by the articulatable support, the actuatable dispensing tool comprising:
      a reservoir housing an uncured environmentally resistant patch; and,
      an actuator for dispensing the uncured environmentally resistant patch through a dispenser disposed at an end of the actuatable dispensing tool.
20. The environmentally resistant patch delivery system of clause 19 further comprising an optical system that provides an optical field of vision that encompasses the dispenser of the actuatable dispensing tool.
21. The environmentally resistant patch delivery system of clause 20, wherein the optical system comprises a borescope connected to the articulatable support.
22. The environmentally resistant patch delivery system of any of clauses 19 to 21 further comprising a thermal treatment system that provides a supplemental heat source to cure the environmentally resistant patch after it is dispensed from the reservoir of the actuatable dispensing tool.
23. The environmentally resistant patch delivery system of any of clauses 19 to 22 further comprising a surface finishing system that defines the surface of the environmentally resistant patch after it is dispensed from the reservoir of the actuatable dispensing tool.
24. The environmentally resistant patch delivery system of any of clause 19 to 23, wherein the environmentally resistant patch comprises:
   one or more rare earth silicates;
   wherein an inorganic composition of the environmentally resistant patch comprises, once cured, from about 80 mole percent to about 100 mole percent of a rare earth monosilicate and/or rare earth disilicate composition and from about 0 mole percent to about 20 mole percent of an inorganic additive; and,
   wherein the environmentally resistant patch has, once cured, an adhesive strength of at least about 3 MPa and a coefficient of thermal expansion of from about 3.5 x 10⁻⁶/°C to about 7.5 x 10⁻⁶/°C.

## Claims

1. An environmentally resistant patch comprising:
one or more rare earth silicates;
wherein an inorganic composition of the environmentally resistant patch comprises, once cured, from about 80 mole percent to about 100 mole percent of a rare earth monosilicate and/or rare earth disilicate and from about 0 mole percent to about 20 mole percent of an inorganic additive; and,
wherein the environmentally resistant patch has, once cured, an adhesive strength of at least about 3 MPa and a coefficient of thermal expansion of from about 3.5 x 10⁻⁶/°C to about 7.5 x 10⁻⁶/°C.

2. The environmentally resistant patch of claim 1, wherein the one or more rare earth silicates comprise at least one of a rare earth monosilicate and a rare earth disilicate, and wherein the rare earth comprises at least one of ytterbium and yttrium.

3. The environmentally resistant patch of claim 1 or claim 2, wherein the inorganic additive comprises at least one of iron oxide, aluminum oxide, silicon oxide and glass.

4. The environmentally resistant patch of any preceding claim, wherein the inorganic additive comprises elemental silicon.

5. The environmentally resistant patch of any preceding claim, wherein the environmentally resistant patch, uncured, comprises from about 30 percent by volume to about 80 percent by volume of the inorganic composition, and from about 70 percent by volume to about 20 percent by volume solvent.

6. The environmentally resistant patch of claim 5, wherein the environmentally resistant patch, uncured, further comprises from about zero percent by volume to about 10 percent by volume of one or more organic additives.

7. The environmentally resistant patch of any preceding claim, wherein the uncured inorganic particles have a size between 10 nm and 100 µm with a packing density greater than 30 percent by volume.

8. The environmentally resistant patch of any preceding claim, wherein the environmentally resistant patch comprises, prior to curing, inorganic particles comprising a bimodal size distribution between 10 nm and 100 µm with a packing density greater than 40 percent by volume.

9. The environmentally resistant patch of any preceding claim, wherein the environmentally resistant patch comprises, prior to curing, inorganic particles comprising a trimodal size distribution between 10 nm and 100 µm with a packing density greater than 50 percent by volume.

10. The environmentally resistant patch of any preceding claim, wherein the environmentally resistant patch comprises, prior to curing, on an inorganic solids volume basis from about 40 percent to about 75 percent coarse sized particles of from about 10 µm to about 100 µm in size, from about 10 percent to about 35 percent medium sized particles of from about 1 µm to about 10 µm in size, and from about 1 percent to about 30 percent fine sized particles of from about 10 nm to about 1 µm in size.

11. The environmentally resistant patch of any preceding claim, wherein the inorganic additive comprises a glass with a CTE from about 3.5 x 10⁻⁶/°C to about 6 x 10⁻⁶/°C.

12. The environmentally resistant patch of any preceding claim, wherein the environmentally resistant patch is provided in a void of a turbine engine component.

13. The environmentally resistant patch of claim 12, wherein the turbine engine component comprises a CMC substrate, and wherein the environmentally resistant patch at least partially extends into the CMC substrate.

14. A turbine engine component comprising:
a substrate material;
a recession resistant outer layer; and,
an environmentally resistant patch at least partially filling a void extending through the recession resistant outer layer, wherein the environmentally resistant patch comprises one or more rare earth silicates, wherein an inorganic composition of the environmentally resistant patch comprises, once cured, from about 80 mole percent to about 100 mole percent of a rare earth monosilicate and/or rare earth disilicate composition and from about 0 mole percent to about 20 mole percent of an inorganic additive; and,
wherein the environmentally resistant patch has, once cured, an adhesive strength of at least about 3 MPa and a coefficient of thermal expansion of from about 3.5 x 10⁻⁶/°C to about 7.5 x 10⁻⁶/°C.

15. An environmentally resistant patch delivery system comprising:
an articulatable support; and,
an actuatable dispensing tool supported by the articulatable support, the actuatable dispensing tool comprising:
a reservoir housing an uncured environmentally resistant patch; and,
an actuator for dispensing the uncured environmentally resistant patch through a dispenser disposed at an end of the actuatable dispensing tool.
